# EUROPEAN PATENT APPLICATION

(11) **EP 4 502 692 A1**
(43) Date of publication of application: **05.02.2025**
(21) Application number: 24192584.1
(22) Date of filing: 02.08.2024
(51) Int. Cl.: G02B 6/44

(54) **DEVICES AND SYSTEMS FOR ORGANIZING CABLES AND/OR FIBERS**

(30) Priority: 03.08.2023 US 202363530486 P
(71) Applicant: Corning Research & Development Corporation, Corning, New York 14831 (US)
(72) Inventor: KLAK, Robert Tomasz, 98220 Zdunska Wola (PL); KRECZMER, Wojciech, 91-849 Lodz (PL); McKINNEY, Larry Todd, Kelly, 76248 (US); WILCOX, Dayne, El Cerrito, 94530 (US); ZAPPEK, Andreas, 46539 Dinslaken (DE)
(74) Representative: Reddie & Grose LLP

(57) **Abstract**

Systems and assemblies are provided that include a base structure and an organization structure. The base structure includes splice tray connection feature(s) configured to optionally receive splice tray(s), along with routing features and hinge features. The organization structure also includes routing features and hinge features. The organization structure is rotatably attachable to the base structure via an interaction between the hinge features. The organization structure, when attached to the base structure, is transitionable between an opened state and a closed state, and the opened state is defined by the second end of the organization structure being spaced apart from the base structure relative to the first end of the organization structure.

## Description

### PRIORITY APPLICATION

This application claims the benefit of priority of U.S. Provisional Application No. 63/530,486, filed on August 3, 2023, the content of which is relied upon and incorporated herein by reference in its entirety.

### FIELD OF THE DISCLOSURE

Embodiments of the present disclosure relate generally to network communications equipment and, more particularly, to devices and systems for organizing one or more cables, such as within communications equipment cabinets and other enclosures.

### BACKGROUND OF THE DISCLOSURE

Cables (such as those used to carry communication fiber) are often routed in and out of communications equipment cabinets and other enclosures in order to connect with various communications equipment. The cables and/or fibers are often routed into various structures within the enclosures in a manner that allows at least a portion of a feeder cable, or any other cable and/or fiber, to be routed out of the enclosure while other cables and/or fibers are, e.g., spliced and configured into drop cables and/or fibers. For example, enclosures may be configured to cause certain fibers from a feeder cable to be configured into drop cables and/or fibers and to cause other cables and/or fibers to continue as a cable and/or fiber into another enclosure such that drop cables and/or fibers can be configured elsewhere. The resulting clustering of cables and/or fibers within such enclosures, which are often very small, is often confusing, cumbersome, and requires a high level of skill from an installer to navigate. In some cases, excess amounts of cables and/or fiber are often wrapped within such enclosures, which can make cable and/or fiber management within the enclosure even more difficult.

Improvements in the foregoing are desired.

### BRIEF SUMMARY OF THE DISCLOSURE

Embodiments of the present disclosure provide for various assemblies and systems that cure many of the above noted defects and difficulties. In this regard, various embodiments of the present disclosure provide systems and assemblies for organizing cable(s) and/or fiber(s) within a base structure of an enclosure in a way that allows for certain portions of cables and/or fibers (such as excess portions of cables and/or fibers) to be easily and quickly moved out of a user's way when the user is opening the enclosure to perform activities such as maintenance or repair activities.

As noted herein, current enclosures contain splice trays and base structures in a configuration that only allows cables and/or fibers to be routed into and out of splice trays within the enclosure. This causes installers to either stuff or wrap excess cable and/or fiber in undesirable places, such as around splice tray(s) or in areas already containing important cables and/or fibers. This reduces functional optionality for maintenance and repair later on, such as when changing the wiring of certain splice trays secured within a base structure. For example, the cluster of excess cables and/or fibers that often occurs makes it difficult for a user to identify the cables and/or fibers that are important to the user's maintenance task, and thus it may take an unreasonable amount of time for the user to complete the task. It would be useful to be able to organize cables and/or fibers within the enclosure, such that cables and/or fibers may be moved out of the way and/or such that certain cables and/or fibers can be more easily identified during later maintenance activities.

The systems and devices disclosed herein include organization structures that are able to attach to base structures in a way that allows a user to organize one or more cables and/or fibers within the organization structure and then transition the organization structure into an opened state such that cables and/or fibers within the base structure can be easily identified and serviced. Example systems and devices disclosed herein have a base structure with cable and/or fiber routing features and hinge features, along with splice tray connection features that are configured to be able to optionally receive splice tray(s). The example systems and devices may also include an organization structure that includes cable and/or fiber routing features and hinge features, and the hinge features of the organization structure may be rotatably attachable to the hinge features of the base structure. The organization structure may be transitionable between an opened state and a closed state such that, when one or more cables and/or fibers are routed through the organization structure, and the organization structure is transitioned to the opened state, a user is able to easily access and identify components within the base structure during, e.g., maintenance activities.

In an example embodiment, a system for organizing at least one of a fiber or a cable is provided. The system includes a base structure, and the base structure includes a first routing feature configured to route the at least one of the cable or the fiber along a desired path within the base structure, a splice tray connection feature configured to receive a splice tray, and a first hinge feature. The system also includes an organization structure, and the organization structure includes a second routing feature configured to receive the at least one of the cable or the fiber from the base structure and route the at least one of the cable or the fiber within the organization structure and a second hinge feature coupled to the first hinge feature of the base structure. The second hinge feature is located on a first end of the organization structure, and the first end is opposite a second end of the organization structure. The organization structure is rotatably coupled to the base structure via an interaction between the first hinge feature and the second hinge feature, and the organization structure, when attached to the base structure, is transitionable between an opened state and a closed state. The opened state is defined by the second end of the organization structure being spaced apart from the base structure relative to the first end of the organization structure.

In some embodiments, the opened state of the organization structure may allow a user to work on an arrangement of the at least one of the fiber or the cable in the splice tray when the splice tray is received by the splice tray connection feature.

In some embodiments, a wall of the organization structure may fit around the splice tray when the organization structure is in the closed state.

In some embodiments, the second routing feature may be further configured to route the at least one of the fiber or the cable from the organization structure to the base structure.

In some embodiments, the base structure may be configured to receive an input feeder cable.

In some embodiments, the input feeder cable may be divided at least into a first fiber and a second fiber. The first fiber may be routed to the organization structure, and the second fiber may be routed to the splice tray connection feature of the base structure.

In some embodiments, the second fiber may be routed through the splice tray when the splice tray is received by the splice tray connection feature, and the second fiber may be further routed out from the splice tray through the base structure as a drop cable.

In some embodiments, the base structure may be further configured to route the first fiber out of the organization structure as an output feeder cable.

In some embodiments, the organization structure may further include a splice feature.

In some embodiments, the at least one of the fiber or the cable may be routed through the organization structure such that the at least one of the fiber or the cable is spliced within the splice feature.

In some embodiments, the organization structure may be removably attachable to the base structure.

In some embodiments, the organization structure may further include a tab that, when actuated while the organization structure is attached to the base structure, expands a clamp of the second hinge feature of the organization structure and enables the organization structure to be removed from an anchor of the first hinge feature of the base structure.

In some embodiments, at least one of the first hinge feature or the second hinge feature may be configured such that, when the organization structure is transitioned from the closed state into the opened state, the organization structure remains in the opened state until an external force is applied to transition the organization structure back to the closed state.

In some embodiments, the second hinge feature may include a middle portion that, when the organization structure is transitioned from the closed state into the opened state, causes the organization structure to remain in the opened state until an external force is applied to transition the organization structure back to the closed state.

In another example embodiment, an organization structure for organizing at least one of a fiber or a cable is provided. The organization structure includes a first routing feature configured to receive the at least one of the fiber or the cable from a base structure and route the at least one of the fiber or the cable within the organization structure and a first hinge feature configured to interact with a second hinge feature of the base structure. The first hinge feature is located on a first end of the organization structure, and the first end is opposite a second end of the organization structure. The base structure includes a second routing feature configured to route the at least one of the fiber or the cable along a desired path within the base structure and a splice tray connection feature configured to optionally receive a splice tray. The organization structure is rotatably attachable to the base structure via an interaction between the first hinge feature and the second hinge feature, and the organization structure, when attached to the base structure, is transitionable between an opened state and a closed state. The opened state is defined by the second end of the organization structure being spaced apart from the base structure relative to the first end of the organization structure.

In some embodiments, the organization structure may further include a splice feature.

In some embodiments, the organization structure may be comprised of plastic.

In another example embodiment, an enclosure for organizing at least one of a fiber or a cable is provided. The enclosure includes a base structure, and the base structure includes a first routing feature configured to route the at least one of the fiber or the cable along a desired path within the base structure, a splice tray connection feature configured to optionally receive a splice tray, and a first hinge feature. The enclosure also includes an organization structure, and the organization structure includes a second routing feature configured to receive the at least one of the fiber or the cable from the base structure and route the at least one of the fiber or the cable within the organization structure and a second hinge feature configured to interact with the first hinge feature of the base structure. The second hinge feature is located on a first end of the organization structure, and the first end is opposite a second end of the organization structure. The organization structure is rotatably attachable to the base structure via an interaction between the first hinge feature and the second hinge feature. The organization structure, when attached to the base structure, is transitionable between an opened state and a closed state, and the opened state is defined by the second end of the organization structure being spaced apart from the base structure relative to the first end of the organization structure.

In another example embodiment, a system for organizing at least one of a fiber or a cable is provided. The system includes a base structure, and the base structure includes a first routing feature configured to route the at least one of the fiber or the cable along a desired path within the base structure. The base structure is configured to receive an input feeder cable. The base structure also includes a splice tray connection feature configured to optionally receive a splice tray and a first connection feature. The system also includes an organization structure, and the organization structure includes a second routing feature configured to receive the at least one of the fiber or the cable from the base structure and route the at least one of the fiber or the cable within the organization structure and a second connection feature configured to interact with the first connection feature of the base structure. The organization structure, when connected to the base structure, is transitionable between an opened state and a closed state. The opened state is defined by the organization structure being spaced apart from the base structure, and the opened state of the organization structure allows a user to work on an arrangement of the at least one of the fiber or the cable in at least one of the base structure or the splice tray when the splice tray is received by the splice tray connection feature. The input feeder cable is divided at least into a first fiber and a second fiber, and the first fiber is routed to the organization structure. The second fiber is routed to the splice tray connection feature of the base structure.

In some embodiments, the base structure may be further configured to route the first fiber out of the organization structure as an output feeder cable.

In some embodiments, a portion of the input feeder cable may be stored in the organization structure, and the portion of the input feeder cable may be rotated out of a user's way when the organization structure is transitioned to the opened state.

In another example embodiment, a system for organizing at least one of a fiber or a cable is provided. The system includes a base structure, and the base structure includes a first routing feature configured to route the at least one of the fiber or the cable along a desired path within the base structure. The base structure is configured to receive an input feeder cable. The base structure also includes a splice tray connection feature configured to optionally receive a splice tray and a first connection feature. The system also includes an organization structure, and the organization structure includes a second routing feature configured to receive the at least one of the fiber or the cable from the base structure and route the at least one of the fiber or the cable within the organization structure and a second connection feature configured to interact with the first connection feature of the base structure. The organization structure, when connected to the base structure, is transitionable between an opened state and a closed state, and the opened state is defined by the organization structure being spaced apart from the base structure. The opened state of the organization structure allows a user to work on an arrangement of the at least one of the fiber or the cable in at least one of the base structure or the splice tray when the splice tray is received by the splice tray connection feature. The base structure is further configured to route the at least one of the fiber or the cable out of the organization structure as an output feeder cable.

In some embodiments, the input feeder cable may be divided at least into a first fiber and a second fiber, and the first fiber may be routed to the organization structure. The second fiber may be routed to the splice tray connection feature of the base structure.

### BRIEF DESCRIPTION OF THE DRAWINGS

Having thus described embodiments of the present disclosure in general terms, reference will now be made to the accompanying drawings, which are not necessarily drawn to scale, and wherein:
FIG. 1 illustrates a perspective view of an example enclosure, in accordance with some embodiments discussed herein;
FIG. 2 illustrates a perspective view of the enclosure of FIG. 1 having a cover that is in an open position and one or more cables and/or fibers that are wrapped around one or more splice trays disposed on a base structure within the enclosure, in accordance with some embodiments discussed herein;
FIG. 3 illustrates a perspective view of the base structure of FIG. 2 with an example organization structure attached thereon, in accordance with some embodiments discussed herein;
FIG. 4 illustrates a perspective view of the organization structure of FIG. 3, in accordance with some embodiments discussed herein;
FIG. 5 illustrates a zoomed-in view of second hinge features of the organization structure of FIGs. 3-4, in accordance with some embodiments discussed herein;
FIG. 6 illustrates a perspective view of the base structure of FIGs. 2-3 and the organization structure of FIGs. 3-5, wherein the organization structure has been transitioned into an opened state, in accordance with some embodiments discussed herein;
FIG. 7A illustrates a perspective view of the second hinge features of the organization structure of FIGs. 3-6 interacting with first hinge features of the base structure of FIGs. 2-3 and 6, in accordance with some embodiments discussed herein;
FIG. 7B illustrates a perspective view of the second hinge features of the organization structure of FIGs. 3-7A having been removed from interacting with the first hinge features of the base structure of FIGs. 2-3 and 6-7 A, in accordance with some embodiments discussed herein;
FIG. 8 illustrates a zoomed-in perspective cross-sectional view (taken along line 8-8 in FIG. 7A) of middle portions of the first hinge features of the base structure of FIGs. 2-3 and 6-7B interacting with the second hinge features the organization structure of FIGs. 3-7B, in accordance with some embodiments discussed herein;
FIG. 9A illustrates a zoomed-in cross-sectional side view of the middle portions of the first hinge features of the base structure of FIGs. 2-3 and 6-8 interacting with the second hinge features the organization structure of FIGs. 3-8, wherein the organization structure is in a closed state, in accordance with some embodiments discussed herein;
FIG. 9B illustrates a zoomed-in cross-sectional side view of the middle portions of the first hinge features of the base structure of FIGs. 2-3 and 6-9A interacting with the second hinge features the organization structure of FIGs. 3-9A, wherein the organization structure is in the opened state, in accordance with some embodiments discussed herein;
FIG. 10 illustrates the base structure of FIGs. 2-3 and 6-9B and the organization structure of FIGs. 3-9B, with example cables and/or fibers routed therethrough and the organization structure being in the closed state, in accordance with some embodiments discussed herein;
FIG. 11 illustrates the base structure of FIGs. 2-3 and 6-10 and the organization structure of FIGs. 3-10, with the cables and/or fibers routed therethrough and the organization structure being in the opened state, in accordance with some embodiments discussed herein;
FIG. 12 illustrates the base structure of FIGs. 2-3 and 6-11 and another example organization structure, with example cables and/or fibers routed therethrough and the organization structure being in a closed state, in accordance with some embodiments discussed herein; and
FIG. 13 illustrates the base structure of FIGs. 2-3 and 6-12 and the organization structure of FIG. 12, with the cables and/or fibers routed therethrough and the organization structure being in the opened state, in accordance with some embodiments discussed herein.

### DETAILED DESCRIPTION

Exemplary embodiments of the present disclosure will be described more fully hereinafter with reference to the accompanying drawings, in which some, but not all embodiments of the present disclosure are shown. Indeed, the present disclosure may be embodied in many different forms and should not be construed as limited to the exemplary embodiments set forth herein; rather, these embodiments are provided so that this disclosure will satisfy applicable legal requirements. Like reference numerals refer to like elements throughout.

Due in part to its extremely wide bandwidth and low noise operation, optical fiber is increasingly being used for a variety of applications, including but not limited to broadband voice, video, and data transmission. Fiber optic communications networks may include a number of interconnection points (such as at which multiple optical fibers are interconnected) and/or connection terminals (e.g., network access point (NAP) enclosures, optical network terminals (ONTs), network interface devices (NIDs)). Accordingly, corresponding fiber optic cables may be managed (e.g., routed through, split, reconfigured, connected, etc.) in many different communications equipment cabinets and other enclosures, some of which may include one or more splice trays.

Systems and assemblies according to the present disclosure allow maintenance personnel to organize cables and/or fibers in an improved manner, such as leading into and/or within enclosures, as discussed herein. In this regard, various example systems and assemblies described herein may enable one or more cables and/or fibers, such as excess portions of cables and/or fibers, to be organized in a way that allows a user to move the one or more cables and/or fibers (e.g., the excess portions of cables and/or fibers) out of the way during activities such as maintenance or repair. In some embodiments, example systems and assemblies may be configured to include an organization structure on which the one or more cables and/or fibers (e.g., the excess portions of cables and/or fibers) may be organized, and the organization structure may be transitionable between a closed state and an opened state.

Various described systems and assemblies provide for improved compliance by maintenance personnel (including, notably, novice maintenance personnel) by offering a simple method of organization within base structures that may be located within, e.g., communications equipment cabinets or other enclosures.

While some of the illustrated and described embodiments focus on use of various embodiments in base structures within enclosures, any type of enclosure or base structure is contemplated for use with various embodiments. For example, the disclosed systems and assemblies may be employed in many different fiber optic management scenarios, such as in fiber distribution hub cabinets, multi-dwelling unit cabinets, front-end and/or back-end cabinets, closures, or other terminals. In some embodiments, various concepts and designs may be easily adjusted for any communications equipment.

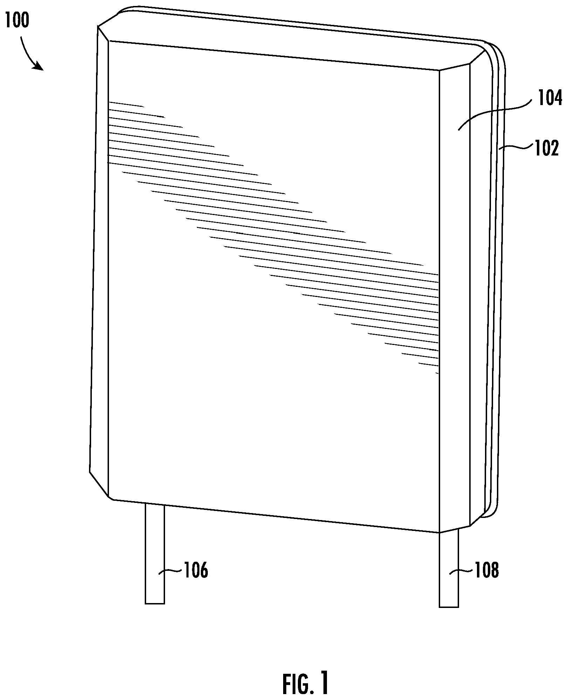

FIG. 1 illustrates an example enclosure 100, which may be installed within a communications architecture (e.g., on a building, other structure, or otherwise within a network). The enclosure 100 includes a back portion 102 and a cover 104, which in FIG. 1 is shown as being in a closed position. The enclosure 100 also includes an inlet feeder cable 106 that enters the enclosure 100 at a first location (e.g., on the left) and an outlet feeder cable 108 that exits the enclosure 100 at a second location (e.g., on the right). It should be appreciated that, in other embodiments, the inlet feeder cable 106 and/or the outlet feeder cable 108 may enter or exit the enclosure 100 at any other location, and further, in some embodiments, the inlet feeder cable 106 and/or the outlet feeder cable 108 may enter and exit at a same location.

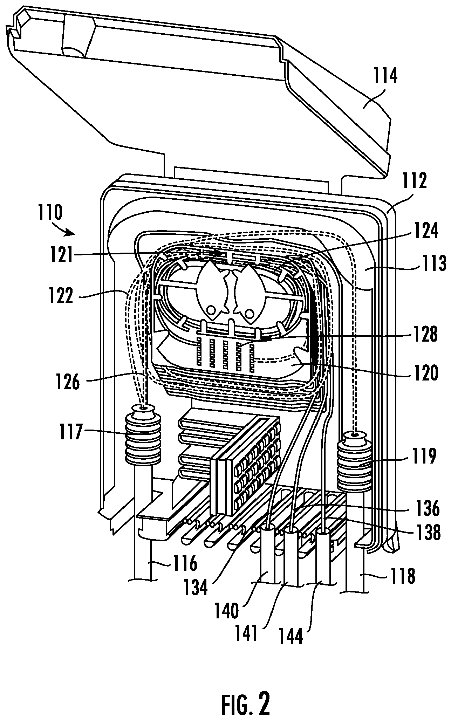

FIG. 2 illustrates another example enclosure 110, which may also be installed within a communications architecture (e.g., on a building, other structure, or otherwise within a network). In the illustration of FIG. 2, the enclosure has a back portion 112 and a cover 114, which is shown in FIG. 2 as being in an open position. The enclosure 110 also includes an inlet feeder cable 116 that enters the enclosure 110 at a first location (e.g., on the left through entrance port 117) and an outlet feeder cable 118 that exits the enclosure 110 at a second location (e.g., on the right through exit port 119). As described above, it should be appreciated that, in other embodiments, the inlet feeder cable 116 and/or the outlet feeder cable 118 may enter or exit the enclosure 110 at any other location, and further, in some embodiments, the inlet feeder cable 116 and/or the outlet feeder cable 118 may enter and exit at a same location.

Within the enclosure is a base structure 113 that is configured with a plurality of splice tray attachment features 121 configured to optionally receive one or more splice trays 120. Some or all of the one or more splice trays 120 may include splice features such as splice features 128 that are configured to enable splicing of fibers when routed therethrough. After the input feeder cable 116 is routed into the base structure 113 through the entrance port 117, the input feeder cable 116 may be divided into one or more cables and/or fibers. In the embodiment shown in FIG. 2, the input feeder cable 116 is divided into a first cable and/or fiber 122 and a second cable and/or fiber 126. The first cable and/or fiber 122 is wrapped around and/or within the base structure 113, through one or more cable and/or fibers routing features, and then is routed out through exit port 119 as output feeder cable 118. The second cable and/or fiber 126 is routed through the one or more cable and/or fibers routing features of the base structure 113 and into one or more of the splice trays 120. The second cable and/or fiber 126 then enters the splice features 128 of one of the splice trays 120 and is spliced into one or more third cables and/or fibers. In the embodiment shown in FIG. 2, the second cable and/or fiber is spliced into cables and/or fibers 134, 136, and 138, which turn into drop cables and/or fibers 140, 141, and 144.

The result may be that the input feeder cable 116 is split into two branches. One branch (e.g., cable and/or fiber 122) is configured to continue into another enclosure as another input feeder cable (e.g., via output feeder cable 118), and the other branch (e.g., cable and/or fiber 126) is spliced into multiple cables and/or fibers 134, 136, and 138, which may then be configured into drop and/or fibers 140, 141, and 144. For example, a cable containing 900 fibers may be split into a cable containing 898 fibers, a first fiber, and a second fiber (providing a total of 900 fibers). The first fiber and the second fiber may each then be spliced further and then configured into drop cables and/or fibers, and the cable containing the 898 fibers may be configured to continue into another enclosure as another input feeder cable. Often times, the branch that is configured to continue into another enclosure as another input feeder cable (e.g., the cable and/or fiber 122) contains a considerable amount of excess cable and/or fiber that has to be stored within the enclosure 110 before it is routed out of the exit port 132. For example, as shown in FIG. 2, the cable and/or fiber 122 is wrapped within the base structure 113, making it confusing to identify which cables and/or fibers are connected to certain components. Especially for a novice user, this lack of organization and clustering of the cables and/or fibers can cause tasks, such as rewiring a splice tray, to be burdensome and time-consuming to complete. Further, the excess cable and/or fiber 122 can further be cumbersome to move around during such tasks.

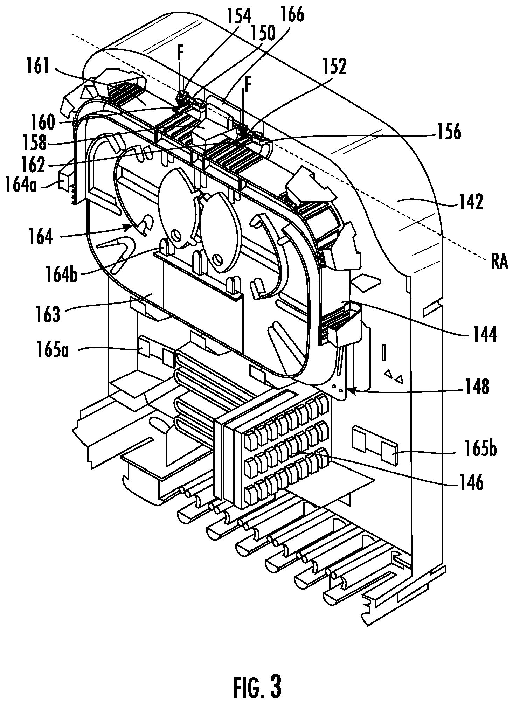

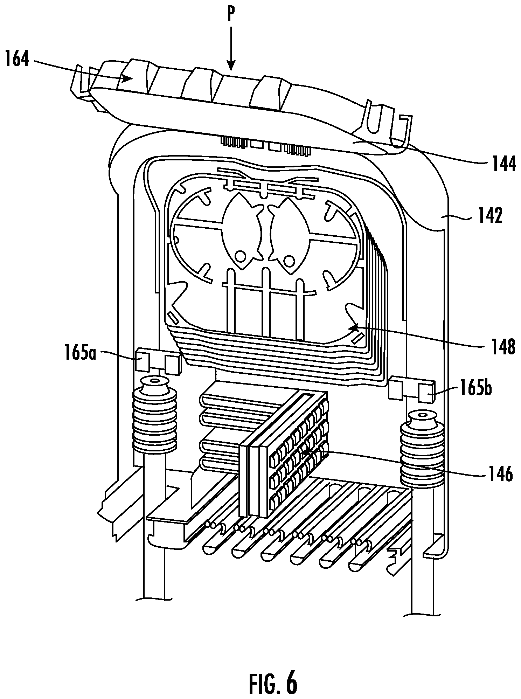

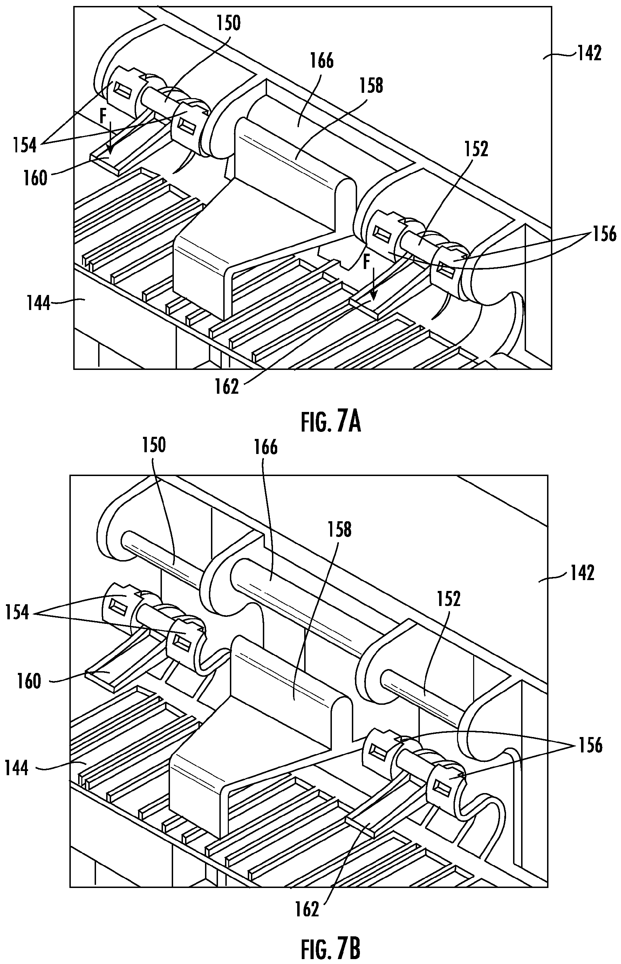

FIG. 3 shows an example base structure 142 with an example organization structure 144 attached thereto. The base structure 142 has one or more first connection and/or hinge features that are interactable with one or more second connection and/or hinge features of the organization structure 144. For example, the first connection and/or hinge features of the base structure 142 include a first anchor 150 and a second anchor 152, as well as a middle portion 166. Correspondingly, the second connection and/or hinge features of the organization structure 144 include a first clamp 154 and a second clamp 156, along with a middle portion 158. As also shown in FIGs. 7A-7B, the first clamp 154 of the organization structure 144 is configured to clamp or otherwise snap onto the first anchor 154 of the base structure 142, and similarly, the second clamp 156 of the organization structure 144 is configured to clamp or otherwise snap onto the second anchor 152 of the base structure 142. The middle portions 158 and 166 are also configured to interact with each other. The interaction of the first connection and/or hinge features with the second connection and/or hinge features of the organization structure 144 may be such that the organization structure 144 can transition from a closed state (as shown in FIG. 3) to an opened state (as shown in FIG. 6). The second hinge and/or connection features may be located on a first end 161 of the organization structure 144 that is opposite a second end 163 of the organization structure 144, and the opened state may be defined by the second end 163 of the organization structure 144 being spaced apart from the base structure 142 relative to the first end 161 of the organization structure 144 (e.g., illustrated in, for example, FIG. 6). In some embodiments, the transition between the closed state and the opened state may be such that the organization structure 144 rotates out or away from the base structure 142 such that a user can work on an organization of cables and/or fibers within the base structure 142 without interference from the cables and/or fibers organized along and/or within the organization structure 144. For example, in some embodiments, the organization structure 144 may be configured to rotate about a rotational axis RA. Other configurations are also contemplated, however, and are within the scope of the present disclosure.

In some embodiments, the organization structure 144 may be configured to be removably attachable to the base structure 142. For example, the organization structure 144 depicted in FIG. 3 includes a first tab 160 and a second tab 162. The first tab 160 is connected to the first clamp 154 such that, when a generally downward force is applied to the first tab 160 in a direction F, the first clamp 154 disengages with the anchor 150. When the force applied generally downwardly onto the first tab 160 in the direction F is great enough, the first clamp 154 will expand or open enough such that the first clamp 154 disengages from and can be removed from the first anchor 150 of the base structure 142. Similarly, the second tab 162 is connected to the second clamp 156 such that, when a generally downward force is applied to the second tab 162 in the direction F, the second clamp 156 disengages with the anchor 152. When the force applied generally downwardly onto the second tab 162 in the direction F is great enough, the second clamp 156 will expand or open enough such that the second clamp 156 disengages from and can be removed from the second anchor 152 of the base structure 142. When forces are applied onto both the first tab 160 and the second tab 162 in the direction F, and the first clamp 154 and the second clamp 156 are disengaged and removed from the first anchor 150 and the second anchor 152, respectively, the entire organization structure 144 may be removed from the base structure 142. Although the organization structure 144 is removable from the base structure 142 in FIG. 3 by way of the first tab 160 and the second tab 162, which are connected to the first clamp 154 and the second clamp 156, in some other embodiments, the organization structure 144 may be differently removable from the base structure 142, or the organization structure may not be removable from the base structure 142. It is within the scope of the present disclosure that other configurations are also contemplated.

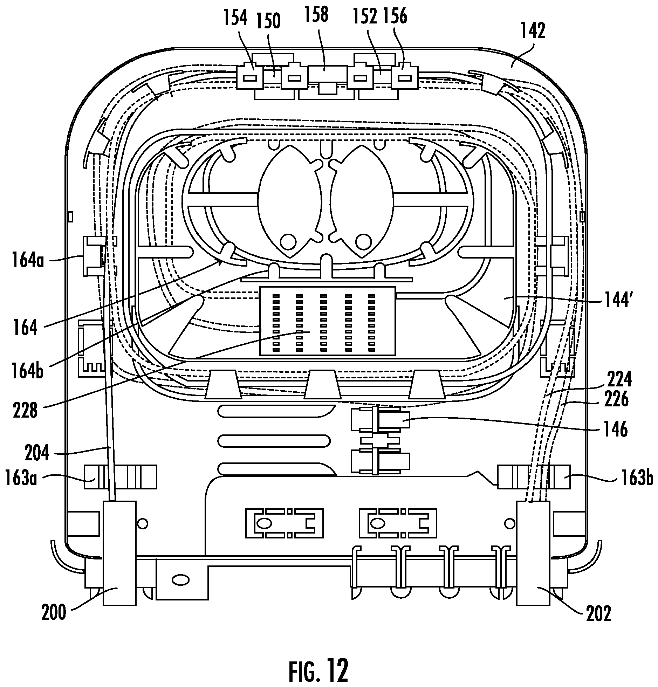

The base structure 142 may include one or more cable and/or fiber routing features 165a, 165b configured to route one or more cables and/or fibers within the base structure 142 and/or to and from the organization structure 144. The organization structure 144 has one or more cable and/or fiber routing features 164 such as first cable and/or fiber routing feature 164a and second cable and/or fiber routing feature 164b. The one or more cable and/or fiber routing features 164 are configured to allow a user to organize one or more cables and/or fibers within the organization structure 144 such that those one or more cables and/or fibers can be transitioned out of the way of a user when the user is trying to organize or otherwise adjust one or more cables and/or fibers that may be routed through and/or spliced in the base structure 142 underneath. Further, as will be described in more detail with respect to FIG. 12, the organization structure 144 may also include one or more splice features that are configured to allow one or more cables and/or fibers to be spliced on the organization structure 144.

It should be appreciated that, although the organization structure 144 is depicted as being substantially ovular in shape in FIG. 3, in other embodiments, the organization structure 144 may have any other size and/or shape. The cable and/or fiber routing features 164 (including first cable and/or fiber routing feature 164a and second cable and/or fiber routing feature 164b) and the cable and/or fiber routing features 165a, 165b may also take on any other configuration. Further, the base structure 142 may have any other size or shape other than that depicted in FIG. 3.

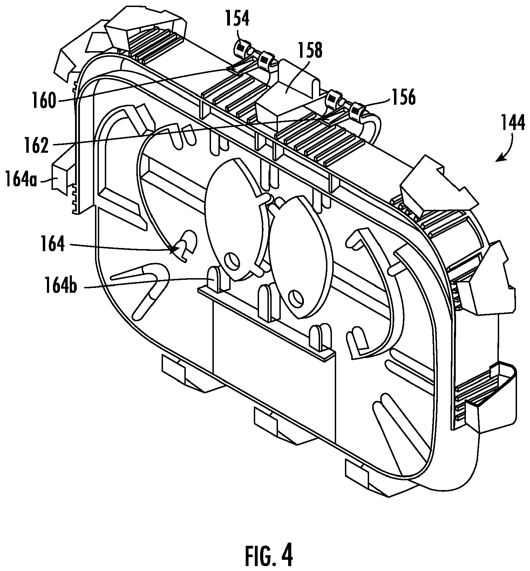

FIG. 4 shows an isolated view of the organization structure 144. As described herein, the organization structure 144 includes one or more cable and/or fiber routing features 164, such as first cable and/or fiber routing feature 164a and second cable and/or fiber routing feature 164b. The organization structure 164 also includes second connection and/or hinge features, which in the embodiment shown in FIG. 4, includes the first clamp 154, the second clamp 156, and the middle portion 158. The organization structure 144 further includes the first tab 160 and the second tab 162, which are configured to allow for removal of the organization structure 144 from a base structure (such as base structure 142) when generally downward forces are applied to the first tab 160 and the second tab 162 and the organization structure 144 is disconnected from the base structure 142.

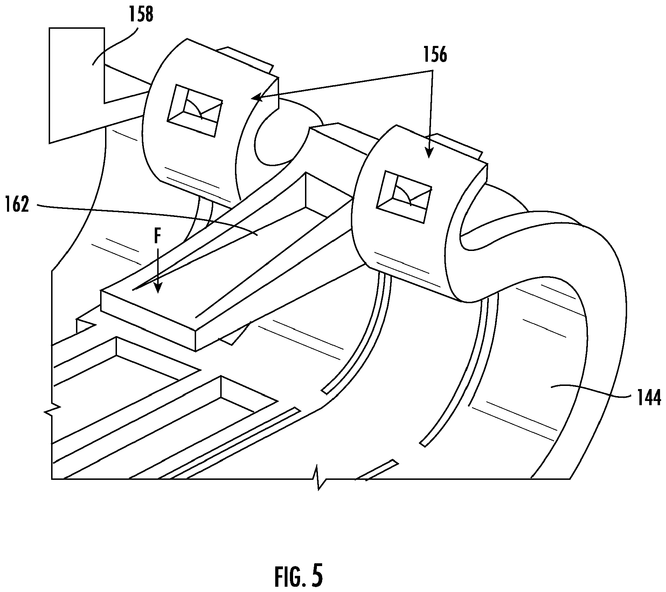

FIG. 5 shows a zoomed-in view of the second clamp 156 of the organization structure 144. Also shown is that the second tab 162 can be pressed in a generally downward direction along direction F in order to expand the second clamp 156 to remove the second clamp 156 from the second anchor 152 of the base structure 142, as will be shown and described with respect to FIGs. 7A-7B. It should be appreciated that, although the second clamp 156 (and the first clamp 154) of the organization structure 144 is a curved feature that can snap onto the second anchor 152 (and the first anchor 150, respectively), in other embodiments, the second clamp element 156 (and the first clamp element 154) may be configured differently. For example, the second clamp element 156 (and the first clamp element 154) may be configured to latch or lock onto the second anchor 152 (and the first anchor 150, respectively) using one or more other elements, or the second clamp element 156 (and the first clamp element 154) may not even be a clamp at all. It is within the scope of the present disclosure that other configurations are also contemplated.

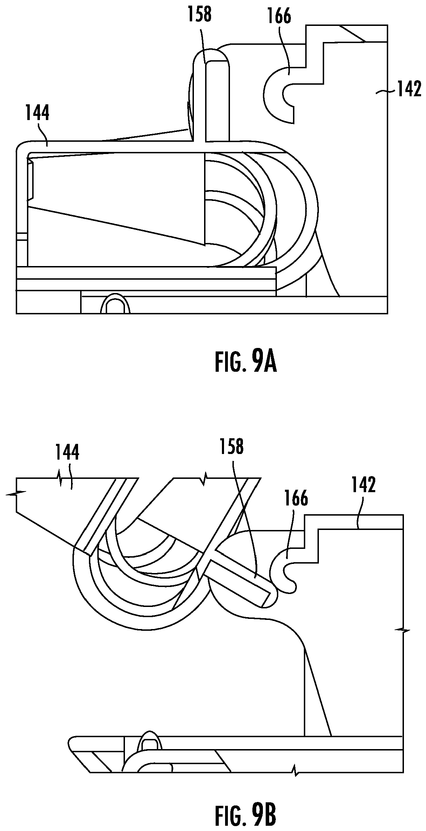

FIG. 6 shows the organization structure 144 in the opened state with respect to the base structure 142. As shown, the transition of the organization structure 144 from the closed state (in FIG. 3) to the opened state (in FIG. 6) allows for a user to be able to access the splice trays 148 and other components of the base structure 142 in a manner that is easier and therefore faster and/or less prone to making mistakes. In some embodiments, the first connection and/or hinge features and the second connection and/or hinge features may be configured such that the organization structure 144 remains in the opened state until, e.g., a sufficient downward force in a direction P is applied to the organization structure 144 to cause it to move back to the closed state. For example, as will be described herein with respect to FIGs. 9A-9B, such a configuration may be achieved by an interaction between the middle portion 158 of the organization structure 144 and the middle portion 166 of the base structure 142.

FIG. 7A shows a zoomed-in view of the first connection and/or hinge features of the base structure 142 and the second connection and/or hinge features of the organization structure 144 when the first connection and/or hinge features and the second connection and/or hinge features are coupled to each other. As shown, the first clamp 154 has been snapped or otherwise disposed around or coupled to the first anchor 150, and the second clamp 156 has been snapped or otherwise disposed around or coupled to the second anchor 152. The first tab 160 is connected to the first clamp 154 such that, when a force is applied onto the first tab 160 in the direction F, the first clamp 154 disengages with and is releasable from the first anchor 150. Similarly, the second tab 162 is connected to the second clamp 156 such that, when a force is applied onto the second tab 162 in the direction F, the second clamp 156 disengages with and is releasable from the second anchor 152. FIG. 7B shows the organization structure 144 after having been removed from the base structure 142 by applying forces onto each of the first tab 160 and the second tab 162.

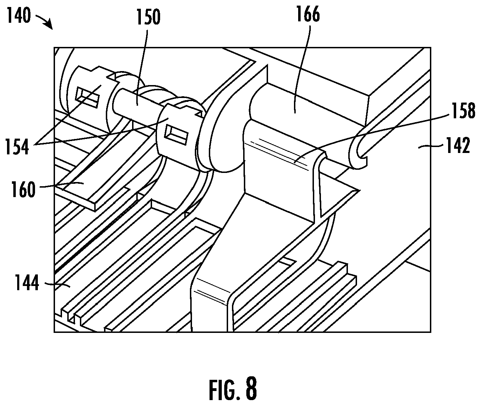

FIG. 8 shows a cross-sectional view (taken along line 8-8 in FIG. 7A) of the first connection and/or hinge features of the base structure 142 and the second connection and/or hinge features of the organization structure 144 when the first connection and/or hinge features and the second connection and/or hinge features are coupled to each other. As shown, the first connection and/or hinge features of the base structure 142 include the middle portion 166, and the second connection and/or hinge features of the organization structure 144 include the middle portion 158. As will be shown and described with respect to FIGs. 9A-9B, the middle portion 158 is configured to engage with the middle portion 166 when the organization structure 144 is transitioned into the opened state. The interaction of the middle portion 158 with the middle portion 166 may, in some embodiments, enable the organization structure 144 to remain in the opened state without a user holding the organization structure 144 in the opened state. This may be useful in situations in which the user needs to repair or otherwise alter a component within or attached to the base structure 142 and needs both hands to do so.

FIG. 9A shows the organization structure 144 in the closed state with respect to the base structure 142. In the closed state, the middle portion 158 of the second connection and/or hinge features of the organization structure 144 is disengaged from the middle portion 166 of the first connection and/or hinge features of the base structure 142. FIG. 9B shows the organization structure 144 in the opened state with respect to the base structure 142. In the opened state, the middle portion 158 of the second connection and/or hinge features of the organization structure 144 is engaged with the middle portion 166 of the first connection and/or hinge features of the base structure 142. The interaction between the middle portion 158 of the organization structure 144 and the middle portion 166 of the base structure 142 when the organization structure 144 is in the opened state is such that, in some embodiments, the organization structure 144 may remain in the opened state without a user holding the organization structure 144 in the opened state and such that the organization structure 144 does not move or rotate too far when the organization structure is moved into the opened state.

For example, the middle portion 158 of the organization structure 144 may stop the organization structure 144 from rotating past a certain angle by the middle portion 158 of the organization structure 144 coming into contact with the middle portion 166 of the base structure 142 at that certain angle of the organization structure 144 with respect to the base structure 142. The middle portion 158 and the middle portion 166 may be further configured such that the certain angle at which the organization structure 144 is stopped with respect to the base structure 142 is a position that enables the organization structure 144 to remain in the opened state due to gravitational forces. That is, a center of gravity of the organization structure 144 may be allowed to rotate past the first connection and/or hinge features of the base structure 142 and the second connection and/or hinge features of the organization structure 144. It is within the scope of the present disclosure that other configurations are also contemplated.

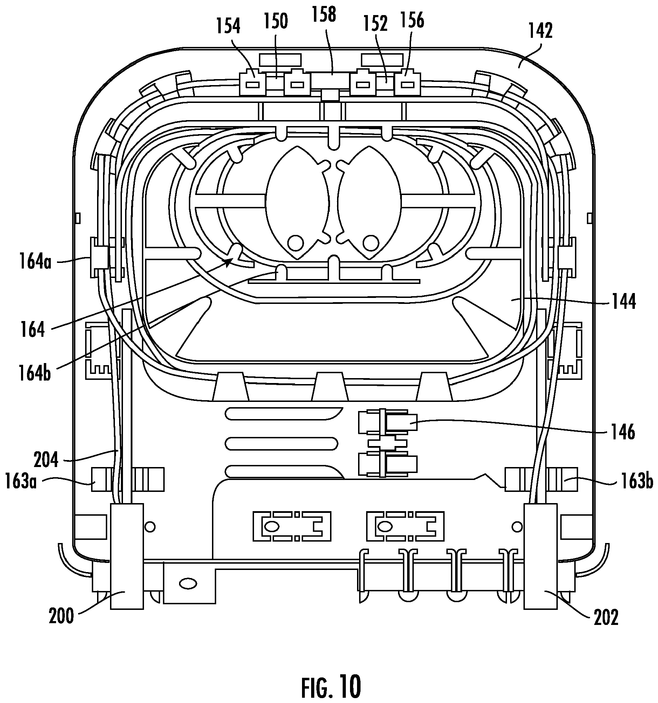

FIG. 10 shows the base structure 142 and the organization structure 144 with a cable and/or fiber 204 organized therein. For example, the cable and/or fiber 204 extends out from an entrance port 200 within the base structure 142 and is routed, via the cable and/or fiber organization features of the base structure 142, to the organization structure 144. The cable and/or fiber 204 is then organized within the organization structure 144 via the cable and/or fiber organization features 164 of the organization structure 144. The cable and/or fiber 204 is then routed from the organization structure 144 back to and through the base structure 142 such that the cable and/or fiber 204 exits the base structure 142 through exit port 202.

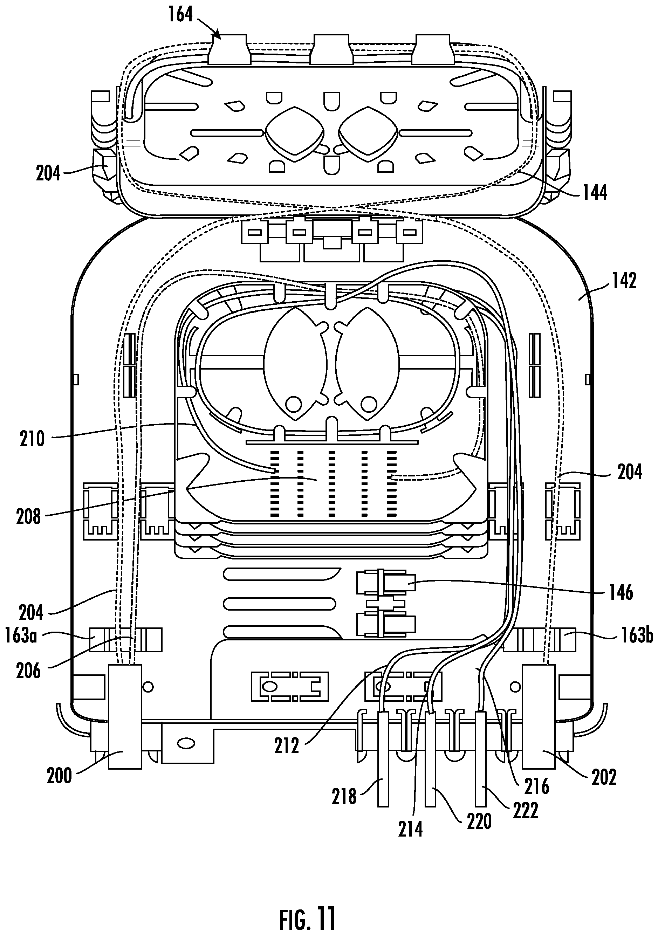

The organization of the cable and/or fiber 204 within the organization structure 144 allows for the components underneath the organization structure 144 to be easily accessed for tasks such as servicing, re-wiring, among others, when the organization structure 144 is, e.g., transitioned from the closed state (as shown in FIG. 10) to the opened state (as shown in FIG. 11). That is, the organization structure 144 may be configured to enable even excess lengths of cable and/or fiber to be stored and organized within an enclosure. For example, a first portion of the cable and/or fiber 204 extends along a left side of the base structure 142 and leads into a left portion of the organization structure 144. A second portion of the cable and/or fiber 204 is wrapped or otherwise organized along and/or within the organization structure 144. The wrapping and/or organization of the second portion of the cable and/or fiber 204 may depend on the length of the cable and/or fiber and the amount of excess of the cable and/or fiber that needs to be organized. For example, the organization of the second portion of the cable and/or fiber 204 may be configured such that a third portion of the cable and/or fiber 204 exits the organization structure 144 on a right side of the organization structure 144 and is routed along a right side of the base structure 142 in a manner that exhibits minimal excess.

It should be appreciated that, although the embodiment shown in FIG. 10 has a cable and/or fiber 204 that enters the base structure 142 on a left side of the base structure 142, enters the organization structure 144 on a left side of the organization structure 144, exits the organization structure 144 on a right side of the organization structure 144, and exits the base structure 142 on a right side of the base structure 142, the cable and/or fiber 204 may be configured to enter and/or exit the base structure 142 and/or the organization structure 144 in other suitable ways in alternate embodiments. Further, the cable and/or fiber 204 may, in other embodiments, be more than one cable and/or fiber, and the cables and/or fibers may each be routed differently with respect to the base structure 142 and/or organization structure 144. It is within the scope of the present dislosure that other configurations are also contemplated.

FIG. 11 shows the base structure 142, the organization structure 144, and the cable and/or fiber 204 of FIG. 10, with the organization structure 144 having been transitioned into the opened state. FIG. 11 also shows a second cable and/or fiber 206 that is spliced by splice features 208 into third cables and/or fibers 212, 214, and 216 and configured into drop cables and/or fibers 218, 220, and 222. As shown, the cable and/or fiber 204 being routed into, through, and out of the organization structure 144 causes an organization of the base structure 142 to be less crowded (e.g., as compared to FIG. 2). It is thus much easier for a user to enter the enclosure and perform tasks such as re-wiring cables and/or fibers within, e.g., the splice features 208, among other tasks.

FIG. 12 shows the base structure 142 with another organization structure 144' connected thereto. The organization structure 144' is different from the organization structure 144 (e.g., as shown in FIG. 10) in that the organization structure 144' has splice features 228. Thus, when the cable and/or fiber 204 is routed into the organization structure 144', the cable and/or fiber is spliced into cables and/or fibers 224 and 226. The cables and/or fibers 224 and 226 may then be routed out of the organization structure 144' into and through the base structure 142. For example, in the embodiment shown in FIG. 12, the cables and/or fibers 224 and 226 are routed out through the exit port 202. It should be appreciated, however, that the cables and/or fibers may be routed straight out from the organization structure 144' and/or in any other suitable configuration in alternate embodiments. Further, it should also be appreciated that any number of cables and/or fibers may be routed into and out of the splice features 228 of the organization structure 144'. It is within the scope of the present disclosure that other configurations are also contemplated.

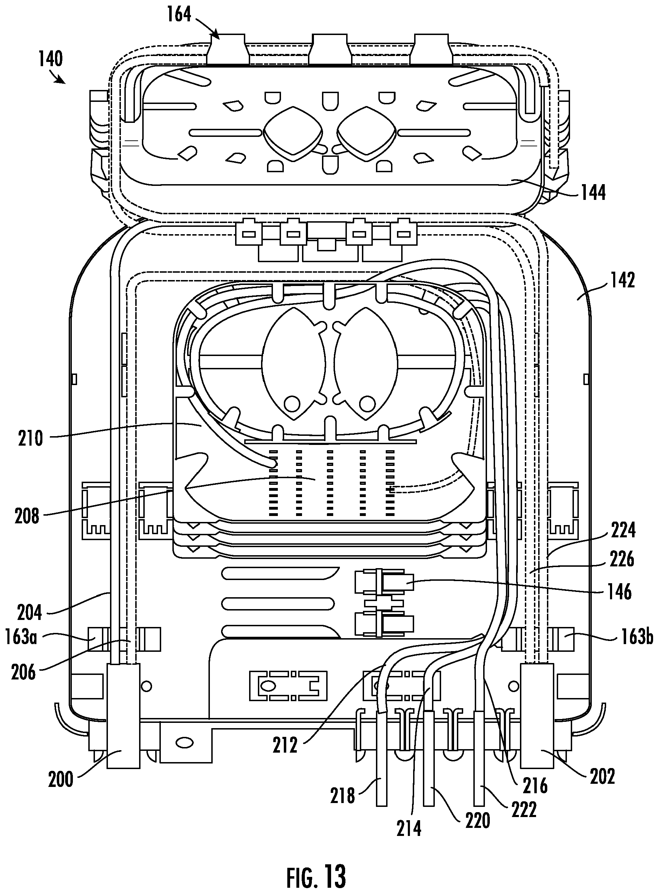

FIG. 13 shows the base structure 142, the organization structure 144', the cable and/or fiber 204, and the cables and/or fibers 224 and 226 of FIG. 12, with the organization structure 144' in the opened state. FIG. 13 also shows the second cable and/or fiber 206 that is spliced by splice features 208 into the third cables and/or fibers 212, 214, and 216 and configured into drop cables and/or fibers 218, 220, and 222, as shown and explained with respect to FIG. 11. As shown, the cables and/or fibers 224 and 226 that were spliced using the splice features 228 on the organization structure 144 (e.g., see FIG. 12) are routed out through the exit port 202. For example, one or both of the cables and/or fibers 224 and 226 may be routed to other enclosure(s) as other input feeder cable(s) and/or fiber(s). In other embodiments, however, the cables and/or fibers 224 and 226 that were spliced using the splice features 228 on the organization structure 144 (e.g., see FIG. 12) may be routed back into the base structure 142 and configured into drop cables and/or fibers. Other amounts of cables and/or fibers and other configurations are also contemplated.

It should be appreciated that the components of the systems and devices disclosed herein may be comprised of any material. For example, in some embodiments, one or both of the base structure 142 and/or the organization structure 144, along with other components discussed herein, may be comprised of a plastic material. However, in some other embodiments, the base structure 142 and the organization structure 144, along with other components discussed herein, may be comprised of any other material.

It should also be appreciated that the systems and devices disclosed herein may have any other connection mechanisms than those discussed and illustrated herein, and further, that the systems and assemblies disclosed herein may have any other cable and/or fiber routing features than those discussed and illustrated herein. For example, the first connection and/or hinge features of the base structure 142 and the second connection and/or hinge features of the organization structure 144 may, in some other embodiments, be configured differently than shown. That is, the first connection and/or hinge features and the second connection and/or hinge features may be configured to interact in a way that causes the organization structure 144 to shift upwards instead of rotating outwards. Other routing features and connection mechanisms are also contemplated.

### Conclusion

Many modifications and other embodiments of the disclosures set forth herein will come to mind to one skilled in the art to which these present disclosures pertain having the benefit of the teachings presented in the foregoing descriptions and the associated drawings. Therefore, it is to be understood that the embodiments of the present disclosure are not to be limited to the specific embodiments disclosed and that modifications and other embodiments are intended to be included within the scope of the present disclosure. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the present disclosure. In this regard, for example, different combinations of elements and/or functions than those explicitly described above are also contemplated within the scope of the present disclosure. Although specific terms are employed herein, they are used in a generic and descriptive sense only and not for purposes of limitation.

## Claims

1. A system for organizing at least one of a fiber or a cable, the system comprising:
a base structure, the base structure comprising:
a first routing feature configured to route the at least one of the cable or the fiber along a desired path within the base structure;
a splice tray connection feature configured to receive a splice tray; and
a first hinge feature; and
an organization structure, the organization structure comprising:
a second routing feature configured to receive the at least one of the cable or the fiber from the base structure and route the at least one of the cable or the fiber within the organization structure; and
a second hinge feature coupled to the first hinge feature of the base structure, the second hinge feature being located on a first end of the organization structure, the first end being opposite a second end of the organization structure,
wherein the organization structure is rotatably coupled to the base structure via an interaction between the first hinge feature and the second hinge feature,
wherein the organization structure, when attached to the base structure, is transitionable between an opened state and a closed state, wherein the opened state is defined by the second end of the organization structure being spaced apart from the base structure relative to the first end of the organization structure.

2. The system of claim 1, wherein the opened state of the organization structure allows a user to work on an arrangement of the at least one of the fiber or the cable in the splice tray when the splice tray is received by the splice tray connection feature.

3. The system of any of claims 1 or 2, wherein a wall of the organization structure fits around the splice tray when the organization structure is in the closed state.

4. The system of claim 1, wherein the second routing feature is further configured to route the at least one of the fiber or the cable from the organization structure to the base structure.

5. The system of claim 1, wherein the base structure is configured to receive an input feeder cable.

6. The system of claim 5, wherein the input feeder cable is divided at least into a first fiber and a second fiber, wherein the first fiber is routed to the organization structure, and wherein the second fiber is routed to the splice tray connection feature of the base structure.

7. The system of claim 6, wherein the second fiber is routed through the splice tray when the splice tray is received by the splice tray connection feature, and wherein the second fiber is further routed out from the splice tray through the base structure as a drop cable.

8. The system of any of claims 6-7, wherein the base structure is further configured to route the first fiber out of the organization structure as an output feeder cable.

9. The system of claim 1, wherein the organization structure further comprises a splice feature.

10. The system of claim 9, wherein the at least one of the fiber or the cable is routed through the organization structure such that the at least one of the fiber or the cable is spliced within the splice feature.

11. The system of claim 1, wherein the organization structure is removably attachable to the base structure.

12. The system of claim 11, wherein the organization structure further comprises a tab that, when actuated while the organization structure is attached to the base structure, expands a clamp of the second hinge feature of the organization structure and enables the organization structure to be removed from an anchor of the first hinge feature of the base structure.

13. The system of claim 1, wherein at least one of the first hinge feature or the second hinge feature is configured such that, when the organization structure is transitioned from the closed state into the opened state, the organization structure remains in the opened state until an external force is applied to transition the organization structure back to the closed state.

14. The system of claim 13, wherein the second hinge feature comprises a middle portion that, when the organization structure is transitioned from the closed state into the opened state, causes the organization structure to remain in the opened state until an external force is applied to transition the organization structure back to the closed state.

15. An organization structure for organizing at least one of a fiber or a cable, the organization structure comprising:
the system of any of claims 1-14;
wherein the first hinge feature is configured to interact with a second hinge feature of the base structure, the first hinge feature being located on a first end of the organization structure, the first end being opposite a second end of the organization structure.

16. The system of any of claims 5-8, wherein a portion of the input feeder cable is stored in the organization structure, and wherein the portion of the input feeder cable is rotated out of a user's way when the organization structure is transitioned to the opened state.
